# FASCICULE DE BREVET EUROPEEN

(11) **EP 1 834 929 B1**
(45) Date de publication et mention de la délivrance du brevet: **14.03.2018**
(21) Numéro de dépôt: 07100733.0
(22) Date de dépôt: 18.01.2007
(51) Int. Cl.: C02F 3/04, C02F 3/06, C02F 101/30

(54) **Dispositif mettant en oeuvre un procédé de traitement d'effluents liquides ou visqueux**
Vorrichtung zur Umsetzung ein Verfahren zur Aufbereitung von flüssigen oder viskosen Abwässern
Device implementing a method of treating liquid or viscous effluents

(30) Priorité: 26.01.2006 FR 0600739
(43) Date de publication de la demande: 19.09.2007
(73) Titulaire: BIOTISA, 21000 Dijon (FR)
(72) Inventeur: Catroux, Gérard, 21000, Dijon (FR); Darmedru, Jean-Yves, 69720, Saint-Bonnet de Mure (FR); Revellin, Philippe, 21340, Vaux-Saules (FR)
(74) Mandataire: Regimbeau

(56) Documents cités:
- EP-A- 1 270 513
- EP-A1- 0 426 160
- US-A1- 2005 205 491
- ANONYMOUS: "Fichesthématiquesgestiondesreliquatsdepul vérisation GroupesRégionaux<phyto>ProcédéPhytobac Version", , 26 March 2003 (2003-03-26), XP055240627, Retrieved from the Internet: URL:http://www.viticulture-oenologie-forma tion.fr/vitioenoformlycee/viti-oeno-enviro nnement-lp-alma-2008/biobed.pdf [retrieved on 2016-01-12]
- ANONYMOUS: "CHAMBRES D'AGRICULTURE REGION CENTRE TRAITEMENTS DES EAUX DE LAVAGE SUR LIT BIOLOGIQUE TRAITEMENTS DES EAUX DE LAVAGE SUR LIT BIOLOGIQUE LE LIT BIOLOGIQUE : UNE SOLUTION ADAPTÉE À L'EXPLOITATION AGRICOLE", , 1 January 2004 (2004-01-01), XP055240555, Retrieved from the Internet: URL:http://www.loir-et-cher.chambagri.fr/f ileadmin/documents/Environnement/Securisat ion_siege_exploitation/Plateforme/fiche6-4 -lit_biologique.pdf [retrieved on 2016-01-12]
- ANONYMOUS: "2 - Chambre Infos-16 -Viticulture", , 1 November 2005 (2005-11-01), XP055240643, Retrieved from the Internet: URL:http://www.charente.chambagri.fr/filea dmin/CA16_internet/espace_documentaire_vit i/espacetelech/07_Gestion_des_effluents_Dé chets_viticoles/gestion_des_effluents_phyt os.déc-05.pdf [retrieved on 2016-01-12]

## Description

La présente invention concerne le domaine du traitement des effluents phytosanitaires. L'invention concerne plus particulièrement un dispositif de traitement d'effluents phytosanitaires pour les dégrader sans rejet dans l'environnement.

Les exploitants agricoles traitent leurs cultures en pulvérisant des produits phytosanitaires. Après le traitement de leurs cultures, la cuve, les rampes de pulvérisation et parfois le tracteur nécessitent un nettoyage à l'eau. L'eau de lavage, dite effluents phytosanitaires, est ainsi chargée de produits phytosanitaires qui doivent être éliminés pour éviter toute pollution du sol et des eaux.

Ces effluents généralement comprennent les produits phytosanitaires et/ou leurs produits de dégradation et/ou les produits associés tels que des tensio-actifs, des produits détergents, des huiles ou des produits organiques.

Dans le domaine du traitement des effluents phytosanitaires, on connaît bien plusieurs procéder pour éliminer les produits phytosanitaires et leurs produits associés tels que des produits détergents, des huiles ou des produits organiques par exemple.

Un premier procédé connu sous la dénomination « Osmofilm » (marque déposée) consiste dans un premier temps à évaporer l'eau des effluents phytosanitaires puis, dans un second temps, à éliminer le produit sec ainsi obtenu en tant que DIS suivant l'acronyme Déchets Industriels Spéciaux.

C'est le cas, par exemple, de la demande de brevet internationale WO 01/16542 qui décrit un procédé de séchage par membrane semi-perméable. Ledit procédé consiste à séparer les matières à éliminer de l'eau dans laquelle lesdites matières sont en suspension en enfermant hermétiquement lesdites matières dans une enveloppe présentant avantageusement une zone de paroi non adhérente auxdites matières jusqu'à l'évaporation complète de l'eau. Cette enveloppe est essentiellement constituée par une membrane polymère sélectivement perméable à la vapeur d'eau.

Les enveloppes utilisées pour la mise en oeuvre de ce type de procédé présentent l'inconvénient d'être particulièrement fragiles. Lesdites enveloppes se déchirent facilement risquant ainsi de polluer les sols et les eaux.

Un second procédé connu sous l'appellation « phytopur » (marque déposée) consiste à supprimer les produits phytosanitaires par adsorption dans un dispositif de filtration.

La demande de brevet français FR 2824 758 décrit un dispositif pour la mise en oeuvre d'un tel procédé. Ledit dispositif consiste en un feutre de fibre de carbone activé et en un grillage ondulé métallique, le feutre et le grillage étant enroulés pour former un cylindre dans lequel on fait circuler les effluents. Le feutre piège les produits phytosanitaires par adsorption puis lesdits produits phytosanitaires sont éliminés en appliquant un courant électrique aux extrémités du grillage.

De la même manière que précédemment, ce type de procédé présente l'inconvénient de nécessiter un dispositif particulièrement onéreux et de générer des déchets industriels spéciaux qu'il convient d'éliminer par la suite.

Un dernier type de procédé dit procédé biologique consiste à obtenir la dégradation des produits phytosanitaires par des micro-organismes en introduisant les effluents dans un lit biologique constitué d'un substrat terreux ou similaire et de micro-organismes.

Un procédé biologique est connu sous le dénomination « biobed » d'origine suédoise. Le « biobed » est constitué d'une fosse creusée dans le sol, recouverte d'une couche d'argile et remplie d'un mélange de paille, de tourbe et de terre, dit lit biologique dans lequel sont introduits les effluents. Les micro-organismes du lit biologique dégradent les produits phytosanitaires des effluents.

Un autre procédé biologique est connu sous la dénomination « Phytobac » (marque déposée) et développé par la société BAYER CROPSCIENCE. Le « Phytobac » est constitué d'une fosse étanche remplie de matériaux minéraux et organiques, de la terre et de la paille notamment, dit lit biologique, favorisant la rétention et la dégradation des effluents chargés de produits phytosanitaires. Lesdits effluents sont épandus sur le lit biologique par des canaux et des rigoles.

Des exemples de lits biologiques (Phytobac, biobed) sont donnés dans les "Fiches thématiques gestion des reliquats de pulvérisation Groupes Régionaux phyto Procédé Phytobac", publié en ligne le 26 mars 2003 (http://www.viticulture-oenologie-formation.fr/ vitioenoformlycee/viti-oeno-environnement-lp-alma-2008/biobed.pdf).

D'autres procédés dits biologiques tels que le brevet américain US 4915842, la demande de brevet européen EP 0426160 ou la demande de brevet allemand DE 4428052 par exemple, ont été proposés pour traiter les eaux polluées.

A l'exception du « Phytobac », tous ces procédés biologiques présentent l'inconvénient d'utiliser des lits biologiques qui ne sont pas parfaitement étanches risquant ainsi de conduire à la contamination d'eaux superficielles ou profondes.

Par ailleurs, tous ces procédés nécessitent de surdimensionner le volume du lit biologique pour prendre en compte les crêtes d'arrivée des effluents à traiter.

De plus, tous ces procédés ne permettent pas d'optimiser l'activité des micro-organismes des lits biologiques de sorte que ces procédés ont une efficacité qui varie au cours du temps.

L'un des buts de l'invention est donc de remédier à ces inconvénients en améliorant les procédés biologiques de l'art antérieur et en proposant un dispositif de traitement d'effluents liquides ou visqueux comportant des produits phytosanitaires permettant une dégradation constante et optimale des produits phytosanitaires des effluents.

On comprend bien que, contrairement aux procédés de l'art antérieur, le maintien de l'humidité du lit biologique en introduisant de manière contrôlée les effluents dans le lit biologique permet de maintenir une dégradation constante et optimale des produits phytosanitaires des effluents par les micro-organismes.

Selon un premier mode de réalisation, les effluents sont introduits dans le lit biologique de telle manière que l'humidité dans ledit lit biologique soit constamment comprise entre 60% et 120% de la capacité de rétention du substrat du lit biologique.

Selon un autre mode de réalisation, les effluents pourront être introduits dans le lit biologique de telle manière que l'humidité dans ledit lit biologique varie de manière contrôlée afin de maintenir dans ce dernier des conditions d'aérobiose, ce qui permet d'améliorer la dégradation des effluents et d'éviter l'émission de mauvaises odeurs lors de ladite dégradation, et/ou des phases d'anaérobiose.

Les effluents sont introduits dans le lit biologique, de préférence, en fonction du taux de rétention des produits phytosanitaires des effluents par fixation sur les constituants du substrat du lit biologique.

Lesdits effluents sont introduits dans le lit biologique soit par épandage desdits effluents sur le lit biologique soit par capillarité.

De manière particulièrement avantageuse, un volume déterminé d'effluents est introduit dans le lit biologique en fonction du taux d'évaporation dudit lit biologique, ledit volume des effluents étant introduit dans le lit biologique de telle manière que le taux d'évaporation dudit lit biologique soit, de préférence, compris entre 500 et 1000 litres de l'eau des effluents par an et par m2.

L'objet de l'invention concerne un dispositif pour le traitement d'effluents phytosanitaires, ledit dispositif comprenant au moins un bac contenant un lit biologique constitué d'un substrat comportant des micro-organismes, et dans lequel sont introduits les effluents, caractérisé en ce qu'il comporte au moins un bac de stockage des effluents et des moyens d'introduction contrôlée des effluents dudit bac de stockage dans le bac du lit biologique, le dispositif comprenant des capteurs (11) de mesure du taux d'humidité du lit biologique de telle manière que l'humidité dans le lit biologique (2) soit globalement comprise entre 60% et 120% de la capacité de rétention du lit biologique (2) et comportant des moyens de drainage (13,14) du lit biologique (2) connectés au bac de stockage (3) des effluents (4) afin d'évacuer lesdits effluents (4) en saturation dans le lit biologique (2) et des moyens d'évacuation d'un trop plein d'effluents (4) consistant en au moins une conduite (15) dite descente de trop plein présentant des extrémités débouchant au-dessus du bac de stockage (3) des effluents (4) et respectivement dans le bac (1) du lit biologique (2) au niveau de la surface supérieure de ce dernier.

D'autres avantages et caractéristiques ressortiront mieux de la description qui va suivre, de plusieurs variantes d'exécution, données à titre d'exemples non limitatifs, du dispositif de traitement d'effluents phytosanitaires conforme à l'invention, à partir des dessins annexés sur lesquels :
- la figure 1 est une représentation schématique du dispositif de traitement d'effluents phytosanitaires conforme à l'invention,
- la figure 2 est une représentation schématique d'une variante d'exécution du dispositif suivant l'invention,
- la figure 3 est une représentation schématique d'une dernière variante d'exécution du dispositif suivant l'invention.

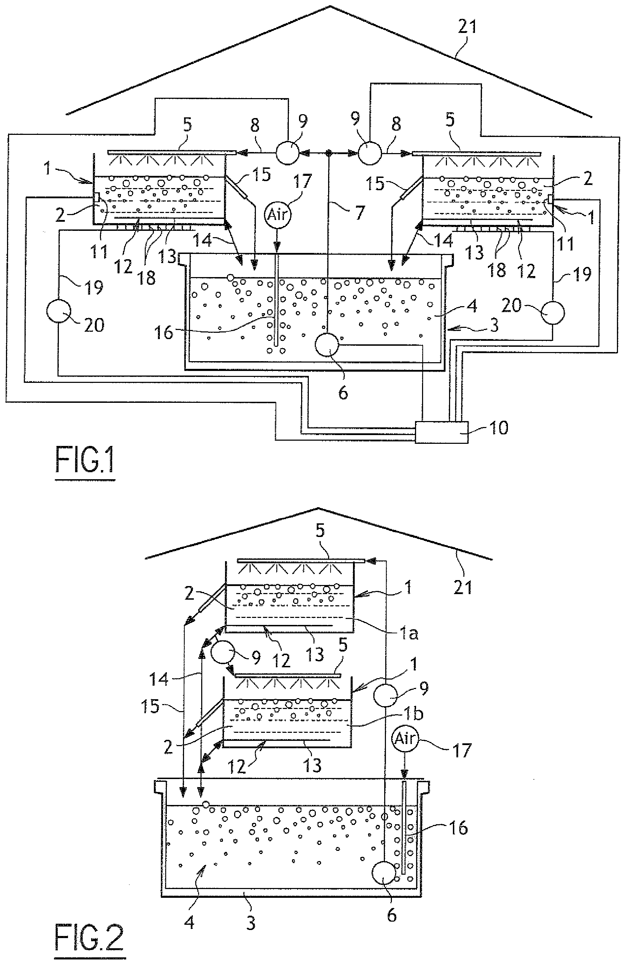

En référence à la figure 1, le dispositif de traitement des effluents phytosanitaires suivant l'invention comprend deux bacs 1 contenant respectivement un lit biologique 2 constitué d'un substrat terreux, de paille et de micro-organismes aptes à dégrader les produits phytosanitaires des effluents à traiter. Ces bacs 1 sont obtenus dans un matériau étanche tel qu'une matière plastique, du métal, de la fibre de verre, du béton ou une combinaison de ces matériaux par exemple.

Le dispositif comporte, par ailleurs, un bac 3 dit de stockage des effluents 4 qui sont recueillis lors du nettoyage de la cuve, des rampes de pulvérisation et éventuellement du tracteur, ainsi que des moyens d'introduction des effluents 4 dudit bac de stockage 3 dans les bacs 1 des lits biologiques 2 de telle manière que l'humidité dans les lits biologiques soit globalement comprise entre 60% et 120%, et de préférence d'environ 100%, de la capacité de rétention de chaque lit biologique 2.

On entend par « capacité de rétention du substrat » le rapport exprimé en pourcentage du poids d'eau restant après le drainage par rapport au poids sec du substrat du lit biologique 2.

De plus, on notera que les effluents 4 se présentent sous une forme liquide avec des éléments solides éventuellement en suspension ou sous une forme visqueuse telle que de la boue par exemple.

Par ailleurs, on observera que le contrôle de l'humidité dans le lit biologique permet de procurer soit une humidité globalement constante soit une variation contrôlée de l'humidité dans le lit biologique 2 afin de maintenir dans ce dernier des conditions d'aérobiose, ce qui permet d'améliorer la dégradation des effluents 4 et d'éviter l'émission de mauvaises odeurs lors de ladite dégradation, et/ou des phases d'anaérobiose.

Dans cet exemple particulier de réalisation du dispositif conforme à l'invention, les moyens d'introduction de manière contrôlée des effluents 4 du bac de stockage 3 dans les lits biologiques 2 consistent en des rampes d'épandage 5 positionnées au dessus desdits lits biologiques 2 et constituées respectivement d'un tube muni de trous sur toute sa longueur. Ces rampes d'épandage 5 sont alimentées en effluents 4 par une pompe hydraulique 6 immergée dans les effluents 4 et connectée à une conduite d'alimentation 7 qui alimente deux conduites secondaire 8 respectivement munie de moyens de régulation 9 du volume d'effluents 4. Ces conduites secondaires 8 sont connectées aux rampes d'épandage 5 pour les alimenter en effluents 4.

La pompe hydraulique 6 et les moyens de régulation 9 sont pilotés par une unité de contrôle 10 à laquelle sont connectés des capteurs 11 de mesure du taux d'humidité des lits biologiques et/ou du taux de rétention des produits phytosanitaires et/ou de l'acidité, c'est-à-dire du pH, du substrat du lit biologique 2 et/ou de la température de ce dernier.

Chaque moyen de régulation 9 consiste, par exemple, en une électrovanne et un débitmètre pour mesurer le volume d'effluents répandu sur le lit biologique 2, l'électrovanne étant fermé dès que le volume déterminé par l'unité de contrôle 10, en fonction du taux d'humidité des lits biologiques et/ou du taux de rétention des produits phytosanitaires et/ou de l'acidité du substrat du lit biologique 2 et/ou de la température de ce dernier, est atteint.

Par ailleurs, chaque bac 1 de lit biologique 2 comporte des moyens de drainage 12 dudit lit biologique 2. Ces moyens de drainage 12 consistent en au moins un drain 13 souple ou rigide positionné dans le fond du lit biologique 2 et connecté au bac de stockage 3 des effluents 4 par une conduite 14 dite descente de drainage débouchant dans le bac de stockage 3. On entend par drain 13 un tube comportant sur sa paroi supérieure des trous ou une grille apte à recueillir les effluents 4 présents en saturation dans le lit biologique 2. Ainsi, les effluents 4 présents en saturation dans le lit biologique 2 sont collectés par le drain 13 puis sont déversés dans le bac de stockage 3.

De plus, chaque bac 1 de lit biologique 2 comporte des moyens d'évacuation d'un trop plein d'effluents 4 consistant en une conduite 15 dite descente de trop plein dont les extrémités débouchent au dessus du bac de stockage 3 des effluents 4 et respectivement dans le bac 1 du lit biologique 2 au niveau de la surface supérieure de ce dernier. Ainsi, en cas d'épandage trop important d'effluents 4 par les rampes 5, le trop plein d'effluents déversés dans le bac 1 du lit biologique 2 s'écoule dans la descente de trop plein 15 pour se déverser dans le bac de stockage 3.

Afin d'améliorer la dégradation de produits phytosanitaires des effluents 4 dans le lit biologique 2, le dispositif comporte une conduite 16 plongeant dans les effluents 4 du bac de stockage et connectée à une source d'alimentation en air comprimé 17. On notera que l'introduction d'air dans les effluents 4 permet d'une part de les oxygéner et d'autre part d'éviter le dépôt des particules en suspension dans les effluents 4. Cette aération des effluents 4 permet de maintenir des conditions aérobies, de supprimer les émissions des mauvaises odeurs et de commencer la dégradation des produits phytosanitaires par l'adjonction dans les effluents 4 de micro-organismes aptes à dégrader les produits phytosanitaires et les produits associés et/ou de peroxydes, de solutions permettant le contrôle de l'acidité, etc... D'une manière générale, l'aération des effluents 4 permet l'application de tout traitement visant à modifier l'état et/ou la composition des effluents 4 du bac de stockage 3.

Accessoirement, chaque bac 1 des lits biologiques 2 comprend des moyens d'aération dudit lit biologique. Ces moyens d'aération sont constitués d'injecteur 18 débouchant dans le fond du bac 1 et alimenté par une conduite 19 connectée à une source d'air comprimé 20.

Il va de soi que la source d'air comprimé alimentant les injecteurs 18 pour l'aération des lits biologiques 2 peut être la même source d'air comprimé alimentant la conduite 16 pour l'aération des effluents 4 sans pour autant sortir du cadre de l'invention.

Par ailleurs, l'alimentation en air comprimé des injecteurs 18 et de la conduite 16 pour l'aération des effluents 4 est, de préférence, pilotée par l'unité de contrôle 10.

Afin de maintenir une humidité globalement constante dans les lits biologiques 2, y compris lorsqu'il n'y a plus d'effluents à traiter dans le bac de stockage 3, de l'eau peut être versée dans ledit bac de stockage par tout moyen approprié. Ainsi, en l'absence d'effluents 4 à traiter, de l'eau sera introduite dans les lits biologiques 2 pour maintenir une humidité compatible avec le maintien de l'activité microbienne desdits lits biologiques 2 pour le traitement ultérieur des effluents 4 à traiter.

Les bacs 1 des lits biologiques 2 sont positionnés sous une toiture 21 ou sous tout type d'abri similaire bien connu de l'homme du métier afin de les protéger des eaux de pluie.

Il va de soi que le dispositif suivant l'invention peut comprendre un ou plusieurs bacs 1 de lit biologique 2 et un ou plusieurs bacs de stockage 3 des effluents 4 sans pour autant sortir du cadre de l'invention.

Par ailleurs, le bac 1 du lit biologique 2 et le bac de stockage 3 des effluents 4 peuvent ne former qu'un unique bac comportant deux compartiments distincts.

Selon une variante d'exécution du dispositif conforme à l'invention, en référence à la figure 2, le dispositif comporte de la même manière que précédemment deux bacs 1, un bac supérieur 1a et un bac inférieur 1b positionné sous le bac supérieur, contenant respectivement un lit biologique 2 constitué d'un substrat terreux ou similaire, de paille et de micro-organismes aptes à dégrader les produits phytosanitaires des effluents à traiter.

Le dispositif comporte, par ailleurs, un bac 3 dit de stockage des effluents 4 positionné sous les bacs 1 des lits biologiques 2, ainsi que des moyens d'introduction des effluents 4 dudit bac de stockage 3 dans les bacs 1 des lits biologiques 2 de telle manière que l'humidité dans les lits biologiques soit globalement comprise entre 60% et 120%, et de préférence d'environ 100%, de la capacité de rétention de chaque lit biologique 2.

Dans cette variante d'exécution, les moyens d'introduction des effluents 4 du bac de stockage 3 dans les lits biologiques 2 consistent en des rampes d'épandage 5 positionnées au dessus desdits lits biologiques 2 et constituées respectivement d'un tube muni de trous sur toute sa longueur.

La rampe d'épandage 5 du bac supérieur 1a est alimentée en effluents 4 par une pompe hydraulique 6 immergée dans les effluents 4 et connectée à une conduite d'alimentation 7 munie de moyens de régulation 9 du volume d'effluents 4.

Les effluents 4 en saturation dans le lit biologique 2 du bac supérieur 1a sont collectés par au moins un drain 13 positionné au fond du bac supérieur 1a. Ce drain 13 est connecté à une conduite 14 dite descente de drainage munie de moyens de régulation 9 et alimentant la rampe d'épandage 5 du bac inférieur 1b.

La pompe hydraulique 6 et les moyens de régulation 9 sont pilotés par une unité de contrôle 10 à laquelle sont connectés des capteurs 11 de mesure du taux d'humidité des lits biologiques et/ou du taux de rétention des produits phytosanitaires et/ou de l'acidité, c'est-à-dire du pH, du substrat du lit biologique 2 et/ou de la température de ce dernier.

Les effluents 4 en saturation dans le lit biologique 2 du bac inférieur 1b sont collectés par au moins un drain 13 positionné au fond du bac inférieur 1b. Ce drain 13 est connecté à une seconde conduite 14 dite descente de drainage débouchant au dessus du bac de stockage 3 des effluents 4.

Ainsi, les effluents 4 présents en saturation dans le lit biologique 2 du bac inférieur 1b sont collectés par le drain 13 puis sont déversés dans le bac de stockage 3.

De plus, chaque bac 1 de lit biologique 2 comporte des moyens d'évacuation d'un trop plein d'effluents 4 consistant en une conduite 15 dite descente de trop plein dont les extrémités débouchent au dessus du bac de stockage 3 des effluents 4 et respectivement dans les bacs inférieur 1b et supérieur 1a des lits biologiques 2 au niveau de la surface supérieure de ces derniers.

Afin d'améliorer la dégradation de produits phytosanitaires des effluents 4 dans le lit biologique 2, le dispositif comporte une conduite 16 plongeant dans les effluents 4 du bac de stockage et connectée à une source d'alimentation en air comprimé 17.

Les bacs 1 des lits biologiques 2 sont également positionnés sous une toiture 21 ou sous tout type d'abri similaire bien connu de l'homme du métier afin de les protéger des eaux de pluie.

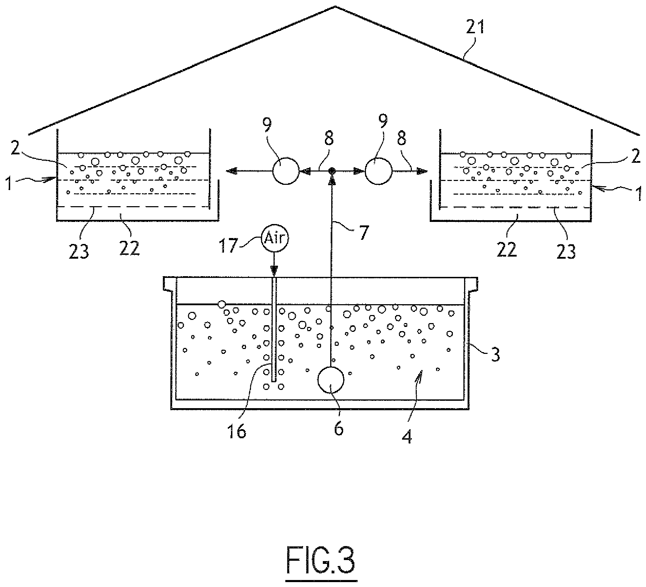

Selon une dernière variante d'exécution du dispositif conforme à l'invention, en référence à la figure 3, le dispositif comporte tous les éléments du dispositif tel que décrit à la figure 1 à l'exception des rampes d'épandage 5 qui sont substituées par des moyens d'introduction des effluents 4 dans le lit biologique 2 par capillarité.

Chaque bac 1 de lit biologique 2 comporte ainsi dans sa partie inférieure une réserve 22 séparée du lit biologique 2 par une grille diffusante 23. Les effluents 4 sont versés dans les réserves 22 par les conduites secondaires 8 et pénètrent dans les lits biologiques 2 par capillarité au moyen de mèches telles que décrites dans les demandes de brevet français FR 2 830 168, FR 2 863 449 ou FR 2 789 546 par exemple.

Il va de soi que les lits biologiques 2 peuvent avantageusement accueillir en culture des plantes agricoles permettant d'augmenter l'évapotranspiration, d'améliorer la structure du substrat des lits biologiques 2 et d'augmenter la vie microbienne par apport de matières organiques.

Par ailleurs, les bacs 1 des lits biologiques 2 et le bac de stockage 3 des effluents 4 pourront avantageusement être maintenus par une structure vertical porteuse permettant l'extraction et l'introduction desdits bacs à des fins d'entretien, d'homogénéisation des lits biologiques 2 et/ou de leur élimination et remplacement par un nouveau lit biologique.

Enfin, il est bien évident que le dispositif de traitement d'effluents permet de traiter des effluents liquides ou visqueux, tels que des boues par exemple, et que les exemples que l'on vient de donner ne sont que des illustrations particulières.

## Revendications

1. Dispositif pour le traitement d'effluents (4) phytosanitaires sans rejet dans l'environnement, ledit dispositif comprenant au moins un bac (1) obtenu dans un matériau étanche contenant un lit biologique (2) constitué d'un substrat terreux comportant des micro-organismes, et dans lequel sont introduits les effluents (4), **caractérisé en ce qu'**il comporte au moins un bac de stockage (3, 22) des effluents (4) et des moyens d'introduction contrôlée des effluents (4) dudit bac de stockage (3, 22) dans le bac du lit biologique (2), le dispositif comprenant des capteurs (11) de mesure du taux d'humidité du lit biologique de telle manière que l'humidité dans le lit biologique (2) soit globalement comprise entre 60% et 120% de la capacité de rétention du lit biologique (2) et comportant des moyens de drainage (13,14) du lit biologique (2) connectés au bac de stockage (3) des effluents (4) afin d'évacuer lesdits effluents (4) en saturation dans le lit biologique (2) et des moyens d'évacuation d'un trop plein d'effluents (4) consistant en une conduite (15) dite descente de trop plein présentant des extrémités débouchant au-dessus du bac de stockage (3) des effluents (4) et respectivement dans le bac (1) du lit biologique (2) au niveau de la surface supérieure de ce dernier.

2. Dispositif suivant la revendication 1 **caractérisé en ce qu'**il comporte au moins une rampe d'épandage (5) s'étendant au-dessus du lit biologique (2) et alimenté par au moins un bac de stockage (3) des effluents (4).

3. Dispositif suivant la revendication 1 **caractérisé en ce que** le bac (1) du lit biologique (2) comporte dans sa partie inférieure une réserve (22) séparée du lit biologique (2) par une grille diffusante (23), lesdits effluents (4) étant introduits dans la réserve (22) afin de pénétrer dans le lit biologique (2) par capillarité.

4. Dispositif suivant l'une quelconque des revendications 2 ou 3 **caractérisé en ce que** la rampe d'épandage (5) ou la réserve (22) est alimentée en effluents (4) par une pompe hydraulique (6) connectée à la rampe d'épandage (5) ou à la réserve (22) et respectivement au bac de stockage (3) des effluents (4) par des conduites (7, 8).

5. Dispositif suivant l'une quelconque des revendications 2 ou 3 **caractérisé en ce que** le bac de stockage (3) des effluents (4) est positionné au-dessus du bac du lit biologique (2) et connecté à la rampe d'épandage (5) ou à la réserve (22) dudit bac (1) du lit biologique (2) par une conduite (7) de telle manière que la rampe d'épandage (5) ou la réserve (22) soit alimentée en effluents (4) par la gravité terrestre.

6. Dispositif suivant l'une quelconque des revendications 1 à 5 **caractérisé en ce que** les moyens de drainage (12) consistent en au moins un drain (13) souple ou rigide et une conduite (14) dite descente de drainage débouchant dans le bac de stockage (3).

7. Dispositif suivant la revendication 6 **caractérisé en ce que** le drain (13) est un tube comportant sur sa paroi supérieure des trous ou une grille apte à recueillir les effluents (4) présents en saturation dans le lit biologique (2).

8. Dispositif suivant la revendication 6 **caractérisé en ce que** le drain (13) est positionné dans le fond du lit biologique (2) et connecté au bac de stockage (3) des effluents (4) par la conduite (14).

9. Dispositif suivant l'une quelconque des revendications 1 à 8 **caractérisé en ce qu'**il comporte une conduite (16) plongeant dans les effluents (4) du bac de stockage (3) et connectée à une source d'alimentation (17) en air comprimé.

10. Dispositif suivant l'une quelconque des revendications 1 à 9 **caractérisé en ce qu'**il comporte des moyens d'aération (18, 19, 20) du lit biologique (2).

11. Dispositif suivant la revendication 10 **caractérisé en ce que** lesdits moyens d'aération (18, 19, 20) consistent en au moins une conduite (18, 19) alimentée par une source d'air comprimé (20) et débouchant dans le lit biologique (2).

12. Dispositif suivant la revendication 2 **caractérisé en ce que** les rampes d'épandage (5) sont constituées respectivement d'un tube muni de trous sur toute sa longueur et sont alimentées en effluents (4) par une pompe hydraulique (6) immergée dans les effluents (4) et connectée à une conduite d'alimentation (7) qui alimente deux conduites secondaire (8) respectivement munie de moyens de régulation (9) du volume d'effluents (4), la pompe hydraulique (6) et les moyens de régulation (9) sont pilotés par une unité de contrôle (10) à laquelle sont connectés des capteurs (11) de mesure du taux d'humidité des lits biologiques et/ou du taux de rétention des produits phytosanitaires et/ou de l'acidité du substrat du lit biologique (2) et/ou de la température de ce dernier.

## Patentansprüche

1. Vorrichtung zur Aufbereitung von phytosanitären Abwässern (4) ohne Freisetzung in die Umwelt, wobei die Vorrichtung mindestens einen Behälter (1) aus einem dichten Material umfasst, der ein biologisches Bett (2) enthält, das von einem erdigen Substrat gebildet ist, das Mikroorganismen aufweist, und worin die Abwässer (4) eingeleitet werden, **dadurch gekennzeichnet, dass** sie mindestens einen Lagerbehälter (3, 22) der Abwässer (4) und Mittel zur kontrollierten Einleitung der Abwässer (4) des Lagerbehälters (3, 22) in den Behälter des biologischen Betts (2) aufweist, wobei die Vorrichtung Messensoren (11) des Feuchtigkeitsgehalts des biologischen Betts umfasst, so dass die Feuchtigkeit in dem biologischen Bett (2) allgemein zwischen 60 % und 120 % inklusive des Rückhaltevermögens des biologischen Betts (2) beträgt, und Drainagemittel (13, 14) des biologischen Betts (2) aufweist, die mit dem Lagerbehälter (3) der Abwässer (4) verbunden sind, um die Abwässer (4) in Sättigung in dem biologischen Bett (2) abzuleiten, und Ableitungsmittel eines Überlaufs von Abwässern (4), die aus einer Überlauf-Fallleitung (15) bestehen, die Enden aufweist, die über dem Lagerbehälter (3) der Abwässer (4) und beziehungsweise in den Behälter (1) des biologischen Betts (2) im Bereich der oberen Fläche desselben ausmünden.

2. Vorrichtung nach Anspruch 1, **dadurch gekennzeichnet, dass** sie mindestens ein Spritzgestänge (5) aufweist, das sich über dem biologischen Bett (2) erstreckt und von mindestens einem Lagerbehälter (3) der Abwässer (4) versorgt wird.

3. Vorrichtung nach Anspruch 1, **dadurch gekennzeichnet, dass** der Behälter (1) des biologischen Betts (2) in seinem unteren Teil ein von einem Verteilerrost (23) von dem biologischen Bett (2) getrenntes Reservoir (22) aufweist, wobei die Abwässer (4) in das Reservoir (22) eingeleitet werden, um in das biologische Bett (2) mittels Kapillarität einzudringen.

4. Vorrichtung nach einem der Ansprüche 2 oder 3, **dadurch gekennzeichnet, dass** das Spritzgestänge (5) oder das Reservoir (22) von einer hydraulischen Pumpe (6), die mit dem Spritzgestänge (5) oder dem Reservoir (22) und beziehungsweise mit dem Lagerbehälter (3) der Abwässer (4) durch Leitungen (7, 8) verbunden ist, mit Abwässern (4) versorgt werden.

5. Vorrichtung nach einem der Ansprüche 2 oder 3, **dadurch gekennzeichnet, dass** der Lagerbehälter (3) der Abwässer (4) über dem Behälter des biologischen Betts (2) positioniert ist und mit dem Spritzgestänge (5) oder dem Reservoir (22) des Behälters (1) des biologischen Betts (2) durch eine Leitung (7) derart verbunden ist, dass das Spritzgestänge (5) oder das Reservoir (22) durch Erdanziehung mit Abwässern (4) versorgt werden.

6. Vorrichtung nach einem der Ansprüche 1 bis 5, **dadurch gekennzeichnet, dass** die Drainagemittel (12) aus mindestens einem starren oder elastischen Drain (13) und einer Drainagefallleitung (14) bestehen, die in den Lagerbehälter (3) ausmünden.

7. Vorrichtung nach Anspruch 6, **dadurch gekennzeichnet, dass** der Drain (13) ein Rohr ist, das auf seiner oberen Wand Löcher oder ein Gitter aufweist, die/das imstande ist, die in Sättigung in dem biologischen Bett (2) vorhandenen Abwässer (4) zu sammeln.

8. Vorrichtung nach Anspruch 6, **dadurch gekennzeichnet, dass** der Drain (13) im Boden des biologischen Betts (2) positioniert und mit dem Lagerbehälter (3) der Abwässer (4) durch die Leitung (14) verbunden ist.

9. Vorrichtung nach einem der Ansprüche 1 bis 8, **dadurch gekennzeichnet, dass** sie eine Leitung (16) aufweist, die in die Abwässer (4) des Lagerbehälters (3) eintaucht und mit einer Druckluft-Versorgungsquelle (17) verbunden ist.

10. Vorrichtung nach einem der Ansprüche 1 bis 9, **dadurch gekennzeichnet, dass** sie Lüftungsmittel (18, 19, 20) des biologischen Betts (2) aufweist.

11. Vorrichtung nach Anspruch 10, **dadurch gekennzeichnet, dass** die Lüftungsmittel (18, 19, 20) aus mindestens einer Leitung (18, 19) bestehen, die von einer Druckluftquelle (20) versorgt wird und in das biologische Bett (2) ausmündet.

12. Vorrichtung nach Anspruch 2, **dadurch gekennzeichnet, dass** die Spritzgestänge (5) von jeweils einem Rohr gebildet sind, das über seine gesamte Länge mit Löchern ausgestattet ist und mit Abwässern (4) von einer hydraulischen Pumpe (6) versorgt wird, die in die Abwässer (4) eingetaucht ist und mit einer Versorgungsleitung (7) verbunden ist, die zwei sekundäre Leitungen (8) versorgt, die jeweils mit Regulierungsmitteln (9) des Volumens der Abwässer (4) ausgestattet sind, wobei die hydraulische Pumpe (6) und die Regulierungsmittel (9) von einer Steuereinheit (10) gesteuert werden, mit der Messsensoren (11) des Feuchtigkeitsgehalts der biologischen Betten und/oder des Rückhaltegehalts der phytosanitären Produkte und/oder des Säuregehalts des Substrats des biologischen Betts (2) und/oder der Temperatur desselben verbunden sind.

## Claims

1. A device for treating plant health product effluents (4) without discharge into the environment, said device comprising at least one tank (1) obtained in a watertight material containing a biological bed (2) consisting of an earth substrate comprising microorganisms, and into which the effluents (4) are introduced, **characterized in that** it comprises at least one storage tank (3, 22) for the effluents (4) and means for controlled introduction of the effluents (4) of said storage tank (3, 22) into the tank for the biological bed (2), the device comprising sensors (11) for measuring the moisture content of the biological bed in such a way that the moisture in the biological bed (2) is generally between 60% and 120% of the retention capacity of the biological bed (2) and comprising draining means (13, 14) for the biological bed (2) connected to the storage tank (3) for the effluents (4) in order to evacuate said effluents (4) saturated in the biological bed (2) and means for evacuating an overflow of effluents (4) consisting of an overflow downcomer conduit (15) having ends opening above the storage tank (3) for the effluents (4) and respectively into the tank (1) for the biological bed (2) at the level of the upper surface of the latter.

2. The device according to claim 1 **characterized in that** it comprises at least one spray bar (5) extending above the biological bed (2) and fed by at least one storage tank (3) for the effluents (4).

3. The device according to claim 1 **characterized in that** the tank (1) for the biological bed (2) comprises in its lower part a reserve (22) separated from the biological bed (2) by a diffusion screen (23), said effluents (4) being introduced into the reserve (22) in order to enter the biological bed (2) by capillary action.

4. The device according to any one of claims 2 or 3 **characterized in that** the spray bar (5) or the reserve (22) is fed with effluents (4) by a hydraulic pump (6) connected to the spray bar (5) or to the reserve (22) and respectively to the storage tank (3) for the effluents (4) by conduits (7, 8).

5. The device according to any one of claims 2 or 3 **characterized in that** the storage tank (3) for the effluents (4) is positioned above the tank for the biological bed (2) and connected to the spray bar (5) or to the reserve (22) of said tank (1) for the biological bed (2) by a conduit (7) in such a way that the spray bar (5) or the reserve (22) is fed with effluents (4) by Earth's gravity.

6. The device according to any one of claims 1 to 5 **characterized in that** the draining means (12) consist of at least one flexible or rigid drain (13) and a draining downcomer conduit (14) opening into the storage tank (3).

7. The device according to claim 6 **characterized in that** the drain (13) is a tube comprising on its upper wall holes or a screen capable of collecting the effluents (4) saturated in the biological bed (2).

8. The device according to claim 6 **characterized in that** the drain (13) is positioned at the bottom of the biological bed (2) and connected to the storage tank (3) for the effluents (4) by the conduit (14).

9. The device according to any one of claims 1 to 8 **characterized in that** it comprises a conduit (16) longitudinally immersed in the effluents (4) of the storage tank (3) and connected to a compressed air supply source (17).

10. The device according to any one of claims 1 to 9 **characterized in that** it comprises aeration means (18, 19, 20) for the biological bed (2).

11. The device according to claim 10 **characterized in that** said aeration means (18, 19, 20) consist of at least one conduit (18, 19) fed by a compressed air source (20) and opening into the biological bed (2).

12. The device according to claim 2 **characterized in that** the spray bars (5) consist respectively of a tube provided with holes over its entire length and are fed with effluents (4) by a hydraulic pump (6) immersed in the effluents (4) and connected to a feed conduit (7) which feeds two secondary conduits (8) respectively provided with regulation means (9) for the volume of effluents (4), the hydraulic pump (6) and the regulation means (9) are controlled by a control unit (10) to which are connected sensors (11) for measuring the moisture content of the biological beds and/or the rate of retention of the plant health products and/or the acidity of the substrate of the biological bed (2) and/or the temperature of the latter.
